# EUROPEAN PATENT APPLICATION

(11) **EP 2 266 741 A1**
(43) Date of publication of application: **29.12.2010**
(21) Application number: 09729415.1
(22) Date of filing: 08.04.2009
(51) Int. Cl.: B23C 5/06, B23C 5/10, B23C 5/20

(54) **TOOL BODY OF CUTTER FOR PLUNGE CUTTING, CUTTER FOR PLUNGE CUTTING, AND PLUNGE CUTTING METHOD**

(30) Priority: 11.04.2008 JP 2008103695
(71) Applicant: Mitsubishi Materials Corporation, Chiyoda-ku Tokyo 100-8117 (JP)
(72) Inventor: HORIIKE, Nobukazu, Joso-shi Ibaraki 300-2795 (JP); SAITO, Takayoshi, Joso-shi Ibaraki 300-2795 (JP)
(74) Representative: HOFFMANN EITLE
(86) International application number: PCT/JP2009/057175
(87) International publication number: WO 2009/125785

(57) **Abstract**

Efficient plunge cutting work in which the tool body moves forward and backward in the axial direction to cut the wall face of a workpiece at high feed-speed, is possible even in the cutting process with backward motions. The tool body 1 has a cylindrical shape with an axis O as its center axis, and provides the insert pocket 3 in the outer periphery close to the tip. The cutting insert 10 is detachably attached in the insert pocket 3. Then, by rotating the tool body 1 and by feeding it along the axis O, the cutting insert 10 cuts the wall face of a workpiece.

Furthermore, the insert pocket includes
a bottom face which faces the tool rotational direction and, wall faces 3B, 3C and 3D which extend from the bottom face toward the tool rotational direction.

Of which, the wall face 3B
is located in the inner circumference close to the tip, faces the outer peripheral side, and
is also an incline wall face which inclines radially outward
along the axis O to the tip, in a view from a position opposite the bottom face.

## Description

### [Technical Field]

This invention relates to
a tool body of plunge cutting cutter,
a plunge cutting cutter, that is, the tool body equipped with a cutting insert, and
a plunge cutting method of the plunge cutting cutter.
Furthermore in this invention, the cutting insert is attached in an insert pocket formed in the outer periphery close to the tip of the tool body: and then, by feeding the plunge cutting cutter along an axis of the tool body, the plunge cutting cutter cuts a wall face of a workpiece.

### [Background Art]

Patent document 1 discloses a plunge cutting method in which a cutter cuts a wall face of a workpiece by feeding the cutter along the axis.
To cut a workpiece, for example, in such a plunge cutting method: by rotating a rotary cutting tool, and by moving it forward along the axis in parallel with a plane to be machined, the rotary cutting tool cuts the workpiece;
after arriving at the terminal of the feeding, the rotary cutting tool is shifted in a direction perpendicular to the axis in parallel with the plane to be machined;
also by rotating the rotary cutting tool, and by moving it backward along the axis in parallel with the plane to be machined, the rotary cutting tool cuts the workpiece; and a series of the above cutting processes is repeated continuously.
Additionally, patent documents 2 and 3 disclose cutters used in such a plunge cutting method.
These cutters are detachable insert type cutters in which a cutting insert having a regular triangle planar shape, namely, a triangular insert, is attached detachably in an insert pocket formed in the tool body.
[Patent document 1] Japanese Patent Publication JP 3331759
[Patent document 2] Japanese Unexamined Patent Application Publication JP H09-290304A
[Patent documents 3] Japanese Unexamined Patent Application Publication JP H10-193204A

### [Disclosure of Invention]

### [Technical Problem]

The cutter used in the cutting method mentioned in the above patent document 1, has a disc shape, i.e. the cutting insert is a round insert. In this method, if the feeding length per cutter increases, the contact length between a cutting edge and the wall face (the plane to be machined) of a workpiece will lengthen, and this can then result in vibration occurring. Thus, the aimed mechanical dimension accuracy of the cutting work cannot be achieved.
However, the tool body is not able to move at a high feed-speed along the axis, and this can then result in an obstruction to the improvement of cutting efficiency due to the aforementioned forward and backward motions of the cutter.

On the other hand, the cutters disclosed in patent documents 2 and 3 are used with a regular triangular insert such as the aforementioned insert. In such a regular triangular insert: one regular triangular face which is one of the regular triangular faces, is used as a rake face;
one corner which is one of the corners of the one regular triangular face, protrudes outwardly above the outer periphery of the tool body; and
cutting edges are formed along two side lines, which go from the one corner, of the one regular triangular face.
Furthermore, the cutting insert is attached in the insert pocket so as to enable both cutting edges to cut a workpiece while the cutter is making forward and/or backward motions.
Therefore, the contact area between the insert and a workpiece does not become too large, and this can then prevent vibration from occurring.

However, the tool bodies of the cutters disclosed in patent documents 2 and 3 have an insert pocket formed close to the tip of a tool body so as to be open there.
To attach the above cutting insert in the insert pocket, each side face of the cutting insert abuts on wall faces in the insert pocket.
The above side faces of the cutting insert are a side face which borders the one regular triangular face at the side line opposite the above one corner, and
another side face which intersects with the above side face, and faces radially outward from the rear of the tool body.
The above wall faces in the insert pocket are one wall face which extends in parallel with the axis, another wall face which inclines radially inward in a direction in accordance with the tip of the tool body, and/or the other wall face which faces radially inward to the tip of the tool body.
Thus, the cutting insert is attached to the tool body by the clamp screw only.

Therefore, when moving the tool body forward toward the tip along the axis to cut a workpiece with this forward motion, the above wall faces can firmly support the cutting load which acts on the cutting insert toward the rear in the direction of the axis.
On the other hand, when moving the tool body backward toward the rear along the axis to cut a workpiece with this backward motion, the cutting load which acts on the cutting insert toward the tip in the direction of the axis must be supported by the clamp screw alone.
Thus, during the backward motion, the feed-speed should be reduced to avoid damage to the clamp screw. Therefore, it is difficult to greatly improve the cutting efficiency in the above methods.

This invention was made against the aforementioned background and aims to provide
a tool body for a plunge cutting cutter,
a plunge cutting cutter, and
a plunge cutting method of the plunge cutting cutter.
The tool body is used for plunge cutting in which the tool body moves forward and backward along the axis to cut the wall face of a workpiece. Furthermore, in this plunge cutting method, efficient cutting work at a high feed-speed can be used for cutting a workpiece, when the tool body is not only making the forward motion but also making the backward motion.

### [Technical Solution]

In order to solve the aforementioned problem and also to accomplish such aims, the tool body of the plunge cutting cutter in the present invention has a cylindrical shape with an axis as its center.
Also in the tool body,
an insert pocket is formed in the outer periphery close to a tip of the tool body in the direction of the axis;
a cutting insert is detachably attached in the insert pocket; and
by rotating the tool body on the axis in a tool rotational direction, and also by feeding the tool body along the axis, the cutting edges of the cutting insert cut a wall face of a workpiece to perform plunge cutting.
The insert pocket comprises
a bottom face which faces the tool rotational direction and,
a plurality of wall faces which extend from the bottom face toward the tool rotational direction.
One of the wall faces which
is located in the inner circumference closer to the tip than the others and faces radially outward,
is an incline wall face which inclines radially outward along the axis to the tip, in a view from a position opposite the bottom face.

Furthermore, in the plunge cutting cutter of the present invention,
the cutting insert is attached in the insert pocket of the tool body of the plunge cutting cutter.
The cutting insert has a hexagonal planar shape with two hexagonal faces.
One hexagonal face of the two hexagonal faces is used as a rake face which faces the tool rotational direction.
The other hexagonal face of the two hexagonal faces is used as an attaching face on which the bottom face abuts closely. One corner which is a corner of the one hexagonal face, protrudes outwardly above the outer periphery of the tool body.
Two side faces, as one pair, of the cutting insert intersect with each other at a corner opposite the one corner. One of the two side faces, which is located closer to the tip of the tool body than the other, abuts on the incline wall face.

Additionally, in the present invention,
a plunge cutting method for cutting the wall face of a workpiece uses the plunge cutting cutter, and comprises
a cutting process in which a cutting edge which extends from the one corner toward the tip of the tool body and cuts a workpiece when the tool body moves forward along the axis; and
another cutting process in which another cutting edge which extends from the one corner toward the rear of the tool body and cuts a workpiece when the tool body moves backward along the axis.

In the tool body having the above configuration, an incline wall face is formed in the insert pocket. In a view from a position opposite the bottom face of the insert pocket, the incline wall face inclines radially outward along the axis to the tip of the tool body.
As in the aforementioned plunge cutting cutter, one of the side faces of the cutting insert abuts on the incline wall face, and then the cutting insert is attached in the insert pocket. Furthermore, the incline wall face can support the cutting load which acts on the cutting insert toward the tip in the direction of the axis.
Thus, in this plunge cutting method, sufficient strength to fix the cutting insert and/or a sufficient rigidity of the cutting insert can be firmly provided. Thus, a high feed-speed can be used even in the cutting process with a backward motion of the tool body.
Therefore, together with the cutting process with a forward motion of the tool body, overall cutting efficiency can be improved.

Here, in the tool body of the present invention, in a view from a position opposite the bottom face, an angle between the incline wall face and the axis is preferably in a range of from 10 to 25 degrees.
If the angle is less than the above range, there will be a risk that it may become difficult for the incline wall face to support fully the load which acts on the cutting insert toward the tip in the direction of the axis.
On the other hand, if the angle is greater than the above range, the thickness of the crossing portion at which the incline wall face and the tip face of the tool body intersect with each other, becomes gradually smaller toward the tip. Thus, there is a risk that this portion tends to be easily deformed.

### [Advantageous Effects]

According to the above explanation, concerning the tool body of the plunge cutting cutter of this invention, the incline wall face can support the load which acts on the cutting insert toward the tip in the direction of the axis.
Thus, the plunge cutting cutter, namely, the tool body equipped with the cutting insert can utilize a high feed-speed for the plunge cutting method. That is, in the plunge cutting method, the plunge cutting cutter can cut a workpiece with both forward and backward motions alternately; and even when making the backward motion, a high feed-speed can be used.
Therefore, cutting efficiency can be improved significantly.

### [Brief Description of the Drawings]

[Fig. 1] Fig. 1 is a perspective view showing one embodiment of the plunge cutting cutter of this invention.
[Fig. 2] Fig. 2 is a plan view of the embodiment in Fig. 1 from a position opposite the bottom face 3A in the insert pocket 3.
[Fig. 3] Fig. 3 is a side view of the embodiment in Fig. 1 from a position on the same plane with the bottom face 3A in the insert pocket 3.
[Fig. 4] Fig. 4 is a front view of the embodiment in Fig. 1 from the tip in the direction of the axis O.
[Fig. 5] Fig. 5 is an enlarged plan view of the tip of the embodiment in Fig. 1 from a position opposite the bottom face 3A in the insert pocket 3.
[Fig. 6] Fig. 6 is an explanation figure showing one embodiment of a plunge cutting method of this invention. This figure shows the cutting process with the backward motion of the tool body 1.

### [Explanation of Reference]

- 1: Tool body
- 3: Insert pocket
- 3A: Bottom face in the insert pocket 3
- 3B: Wall face in the insert pocket 3 (Incline wall face)

- 3C: and 3D Wall faces in the insert pocket 3
- 4: Clamp screw
- 5: Clamp device
- 10: Cutting insert
- 11: Rake face
- 12: Attaching face
- 13: Flank face (side face of the cutting insert 10)

- 14: Cutting edge
- 15: and 16 Corners
- O: Axis of the tool body 1
- T: Tool rotational direction
- θ: Angle of inclination of the wall face 3B
- W: Workpiece
- P: Wall face of the workpiece W

### [Best Mode for Carrying Out the Invention]

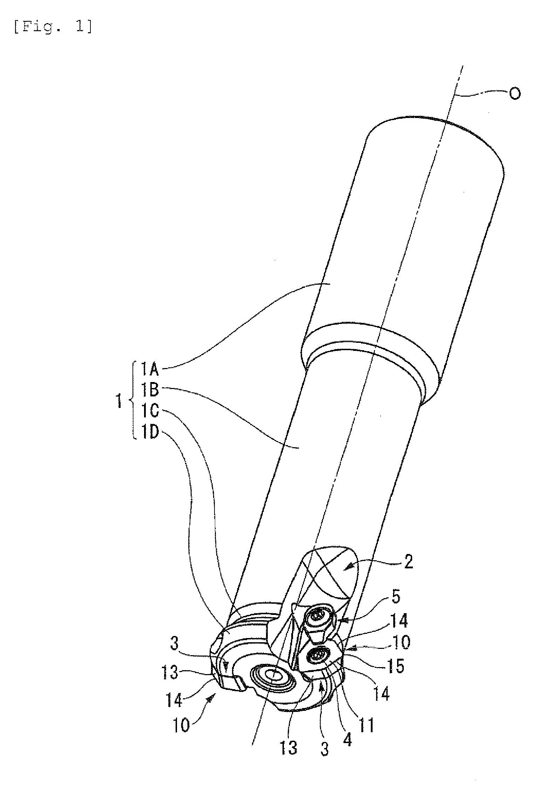

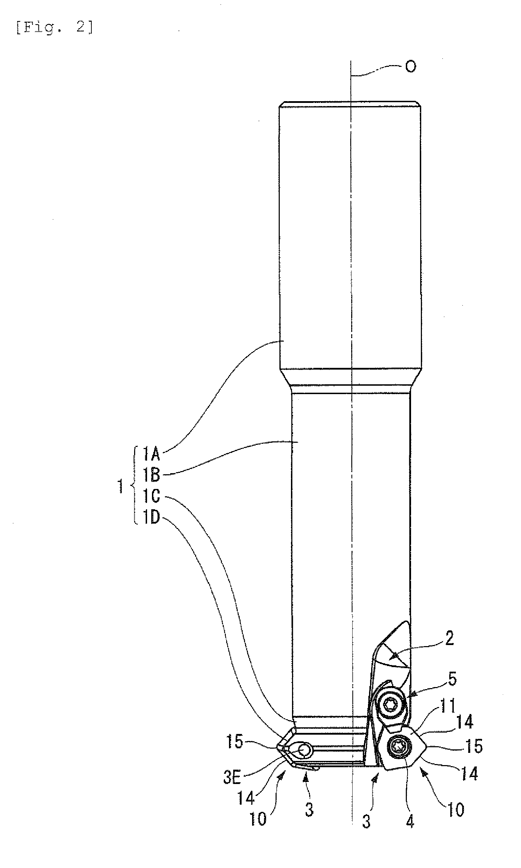

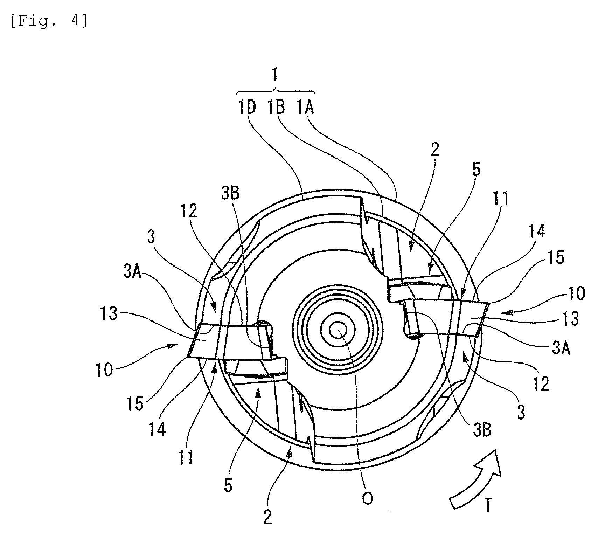

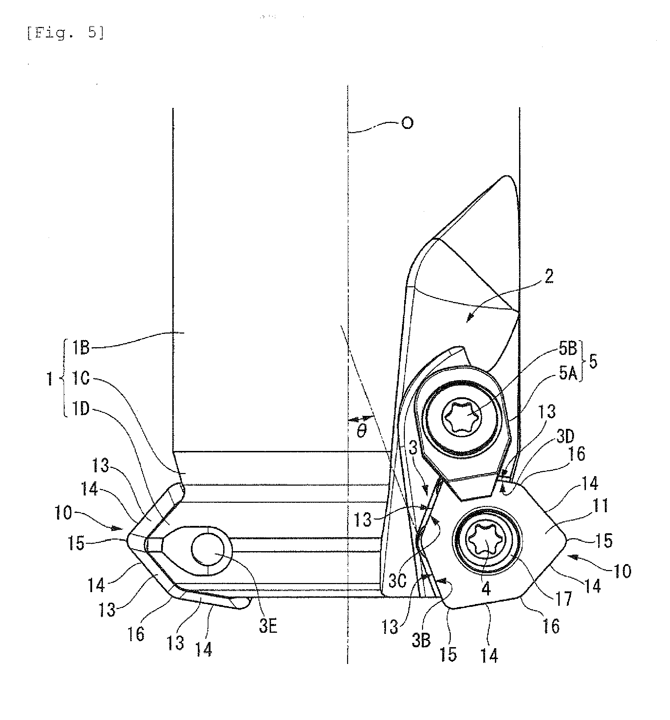

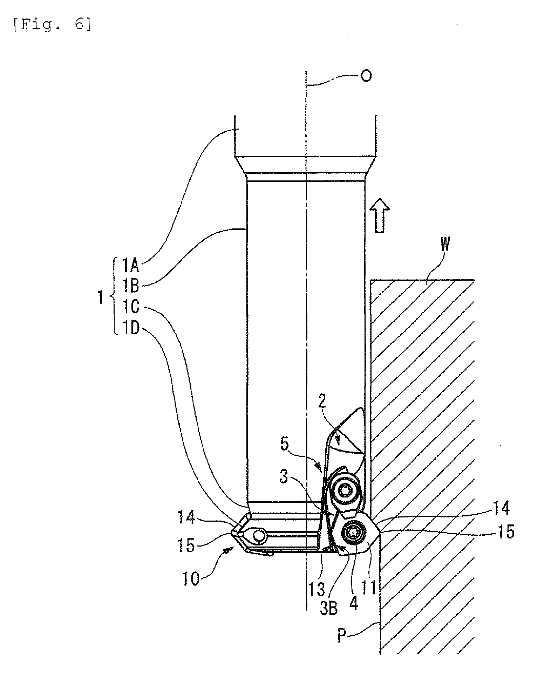

Figs. 1 to 5 show one embodiment of a plunge cutting cutter of this invention.
This embodiment of the plunge cutting cutter has a construction in which a cutting insert 10 is detachably attached to a tool body 1 of the one embodiment.
The tool body 1 of this embodiment
is made of steel or other materials, has a shape in cylindrical tiers with respect to an axis O, and
is used for plunge cutting in which the tool body 1 cuts a wall face of a workpiece W.
The rear (an upper side in Figs. 1 to 3) of the tool body is a shank 1A with a large diameter. As the first step, the shank 1A is attached to the spindle of a machine tool. Furthermore, by rotating the tool body 1 in a tool rotational direction T on the axis O, and also by feeding the tool body 1 along the axis O, plunge cutting as shown in Fig. 6 is performed.

In the tool body 1, the section toward the tip from the shank 1A (a lower side in Figs. 1 to 3) is a straight neck 1B with an outer diameter which is constant and is smaller than that of the shank 1A.
Furthermore, a cutting edge section 1D is formed beyond the straight neck 1B. The cutting edge section 1D has a disk shape with an outer diameter which is slightly larger than that of the straight neck 1B, and connects with the straight neck 1B by a narrow part 1C. The diameter of the narrow part 1C reduces gradually along the axis toward the tip. The cutting edge section 1D is the tip of the tool body 1. The tool body 1 of this embodiment and the plunge cutting cutter of this embodiment, namely, the tool body 1 equipped with the cutting insert 10, have a shape which is rotationally symmetrical with respect to the axis O at a predetermined angle (180° in this embodiment).

In the tool body 1 of this embodiment, the sections from the shank 1A to the cutting edge section 1D, are coaxial with respect to the axis O, and are integrally formed as one unit. Additionally, other configurations are also usable. In such configurations, for example,
only the tip of the tool body 1 including the cutting edge section 1D is made of steel and the like;
the rear including the shank 1A is made of hard material such as cemented carbide; and
the tip and the rear are coaxially joined and attached detachably to each other.

Furthermore, from the cutting edge section 1D to the straight neck 1B, a plurality of (in this embodiment two) chip pockets 2
are open in the tip face of the tool body 1 and in the outer periphery of tool body 1,
extend toward the rear, and
are located radially at intervals around the tool body 1. Each insert pocket 3 is formed in the outer periphery close to the tip of a face in the chip pocket 2 facing the tool rotational direction T.
Each cutting insert 10 is seated on the insert pockets 3, and is detachably attached by a cramp screw 4. Furthermore, clamp devices 5 which consist of a clamp piece 5A and a clamp screw 5B for clamping each cutting insert 10 attached to the tool body 1 in the aforementioned manner, are provided in the tool body 1 of this embodiment.

The cutting insert 10 attached in the aforementioned manner, is made of a hard material such as cemented carbide, and has a hexagonal planar shape with two hexagonal faces.
One hexagonal face of the two hexagonal faces is used as a rake face 11; and the other hexagonal face of the two hexagonal faces is used as an attaching face 12.
Six side faces located between the rake face 11 and the attaching face 12 are used as flank faces 13.
Cutting edges 14 are formed along ridge lines where the flank faces 13 and the rake face 11 intersect with each other. That is, the cutting edges 14 are formed along the six side lines of the rake face 11.
From the rake face 11 to the attaching face 12, the flank face 13 gradually inclines away from a workpiece. This inclination allows a clearance angle for the cutting edge 14. Thus, the cutting insert 10 is a positive insert.

The rake face 11 has a hexagonal shape. In this embodiment, the six side lines of this hexagon, namely, the six edge lines along which the cutting edges 14 are formed, have an equal length.
Furthermore, the hexagon is an irregular hexagon. In the irregular hexagon, three corners where two of the side lines next to each other intersect at an equal (interior) angle of 120° or less, are corners 15;
the other three corners where two of the side lines next to each other intersect at an equal (interior) angle of 120° or more, are corners 16; and the corners 15 and the corners 16 are alternately located around the rake face 11.
Here, the above angle of 120° is the interior angle of a regular hexagon.
Additionally, each corner 15 and each corner 16 is formed as a convex curved shape to smoothly connect the cutting edges 14 thereat.

The form of the attaching face 12 is also an irregular hexagon which is similar to the rake face 11 and is one size smaller than the rake face 11.
Each flank face 13 has a plane shape which inclines except for the portions close to the aforementioned corners 15 and 16. Furthermore, a mounting hole 17 into which the clamp screw 4 is inserted, goes through from the rake face 11 to the attaching face 12 and is open at the center of these faces.
Also, the shape of the cutting insert 10 is rotationally symmetrical with respect to the mounting hole 17 at the angle of 120°.

Such a cutting insert 10 is attached in the insert pocket 3. The insert pocket 3:
is formed so as to be open in the tip face of the tool body 1 and in the outer periphery surface of the cutting edge section 1D, and
is a concavity which sinks concavely to some degree below a face. The face is in the chip pocket 2 and faces the tool rotational direction T.
Also, the insert pocket 3 provides a bottom face 3A, and a plurality of (in this embodiment three) wall faces 3B, 3C and 3D. The bottom face 3A, onto which the attaching face 12 of the cutting insert 10 abuts closely, faces the tool rotational direction T. The wall faces 3B, 3C and 3D rise steeply from the bottom face 3A so as to extend in the tool rotational direction T.

The bottom face 3A has an irregular hexagonal shape in which its form and its size are approximately equal to those of the attaching face 13.
This irregular hexagonal shape allows the bottom face 3A to closely fit to the attaching face 12.

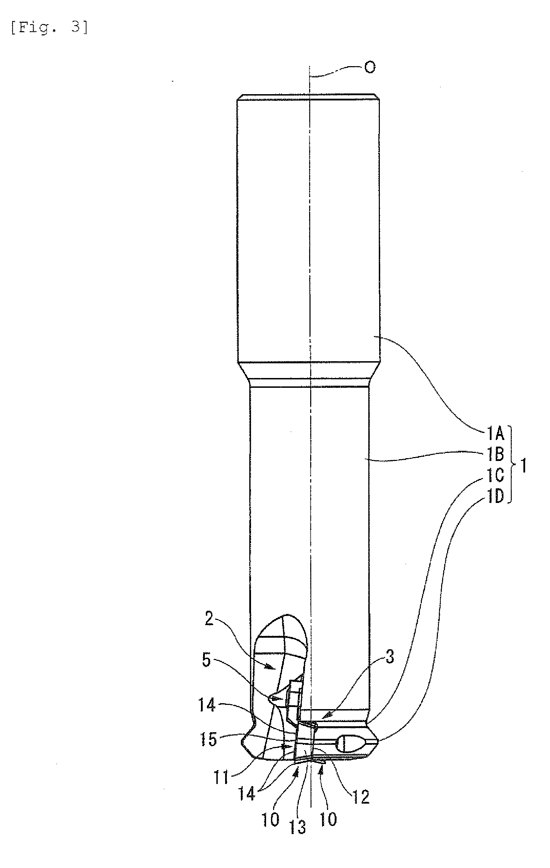

Fig. 3 shows that the bottom face 3A slightly inclines to the direction opposite the tool rotational direction T along the axis O toward the rear.
Furthermore, at the center of the bottom face 3A, a screw hole 3E into which the clamp screw 4 is screwed, is open so as to be perpendicular to the bottom face 3A and so as to go through the cutting edge section 1D.

When the bottom 3A and the attaching face 12 closely abut on each other by flitting their shapes to each other, and the cutting edge 10 is seated there,
one corner 15 which is one of the corners 15 of the rake face 11 of the cutting insert 10, protrudes outwardly above the outer periphery of the tool body 1; and
the bisector of the one corner 15 is located on a plane perpendicular to the axis O.
The outer peripheral surface of the cutting edge section 1D, other than the chip pocket 2 and the opening of the screw-hole 3E, has a shape like a counter on a Japanese abacus, i.e. a shape as though two identical frustums were connected to each other at their bases.
In other words, the shape seems to be a solid of revolution, namely, the revolution of two sides and one side around the axis O, wherein
the two sides and the one side are sides of the irregular hexagon formed with the bottom face 3A of the insert pocket 3; the one side ranges toward the tip of the insert pocket 3; and a corner of the irregular hexagon at which the two sides intersect with each other, protrudes outwardly above the outer periphery of the irregular hexagon.

On the other hand, the wall faces 3B, 3C and 3D are formed along the three other sides of the irregular hexagon other than the above three sides.
The wall faces 3B, 3C and 3D
are inclined to the bottom face 3A at angles fitting to the angles between the attaching face 12 of the cutting insert 10 and the flank faces 13, and
are formed so as to extend from the three sides of the bottom face 3A toward the tool rotational direction T, respectively.
However, clearances for preventing contact with the cutting insert 10 are formed
at the portions where the bottom face 3A intersects with the wall faces 3B, 3C and 3D respectively, and
at the portions where the wall faces 3B, 3C and 3D, adjacent to each others, intersect respectively.
Furthermore, each wall face 3B, 3C and 3D is an inclined plane as previously mentioned.

Since the wall faces 3B, 3C and 3D have the above forms in a view from a position opposite the bottom face 3A,
the wall faces 3B and 3C, as one pair, are located in the inner circumference of the tool body 1; face the outer peripheral side; and extend in directions in which
the wall faces 3B and 3C intersect with each other at an angle equal to the angle between two side faces, as one pair, of the cutting insert 10 (the flank faces 13) which intersect with each other at the corner 16.
Also the wall face 3C of these wall faces is located at a position close to the rear. Furthermore, in the same view,
the wall face 3D is adjacent to the wall face 3C; faces toward the tip of the tool body 1; and extends in a direction to intersect with the wall face 3C at an angle equal to the angle between two side faces, as one pair, of the cutting insert 10 (the flank faces 13) which intersect with each other at the corner 15.

Furthermore, in the view from a position opposite the bottom face 3A; the wall face 3B,
is located at a position close to the tip among the wall faces 3B and 3C;
inclines radially outward along the axis O to the tip; and is an incline wall face in this embodiment.
An angle θ between the wall face 3B and the axis O is in a range of from 10 to 25 degrees.
Also, in the same view from a position opposite the bottom face 3A,
the wall face 3C which extends toward the rear, inclines radially outward along the axis O to the rear. The angle between the wall face 3C and the axis O is approximately equal to the angle θ.
Additionally, the wall face 3D slightly inclines radially outward to the tip.

To seat the cutting insert 10 in the insert pocket 3 having the above form:
as stated above, the attaching face 12 closely abuts on the bottom face 3A, and also the rake face 11 faces the tool rotational direction T;
the one corner 15 and the cutting edges 14 as one pair which intersect with each other at the one corner 15, protrude outwardly above the outer periphery of the cutting edge section 1D; and
one of cutting edges 14 also protrudes above the tip of the cutting edge section 1D.
The one of the cutting edges 14 extends toward the tip, and connects with another cutting edge 14 at the corner 16; and the another cutting edge 14 extends from the one corner 15 to the corner 16.
Furthermore, the clamp screw 4 goes through the mounting hole 17, and is screwed into the screw-hole 3E.
Thus, the cutting insert 10 is mounted on the insert pocket 3. Also, the cutting edges 14 as one pair which intersect each other at the one corner 15, are arranged so as to protrude outwardly above the outer periphery of the straight neck 1B of the tool body 1.

The screw-hole 3E is slightly eccentric with the mounting hole 17 of the cutting insert 10 seated in the insert pocket 3. Thus, by screwing the clamp screw 4, the cutting insert 10 is moved so as to be pushed radially inward to the rear of the tool body 1.

Thereby, the cutting insert 10 is pressed to the bottom face 3A. Furthermore, at least two of the flank faces 13 abut on the wall faces 3B, 3C and 3D.
These two flank faces 13

Are among the flank faces 13 opposite the wall faces 3B to 3D, and are opposite the wall faces 3B and 3D.
Therefore, the cutting insert 10 is attached to the tool body 1 wherein
one of the flank faces 13 abuts on the wall face 3B which is the incline wall face;
the one of the flank faces 13 is one of two side faces (the flank faces 13), and is located closer to the tip of the tool body than the others; and
the two side faces, as one pair, intersect each other at the corner 16 opposite the one corner 15.

Furthermore, a screw-hole not shown in the figures is formed in the face, which is located close to the rear in the insert pocket 3 and faces the tool rotational direction T of the chip pocket 2.
The clamp device 5 has a construction in which,
the clamp screw 5B goes through the clamp piece 5A, and is screwed into the above screw-hole; and
as need arises, the coil spring or the similar is provided between this clamp piece 5A and the above face.
Thus, by screwing the clamp screw 5B, the nose portion of the clamp piece 5A presses a portion which is of the flank face 11, and is closer to the rear than the mounting hole 17; and then the cutting insert 10 is pressed further against the bottom face 3A side.

The plunge cutting cutter of this embodiment is the tool body 1 equipped with the cutting insert 10 in this embodiment. Furthermore, such a plunge cutting cutter is used for a plunge cutting method which is one embodiment of the present invention, in which a wall face P of the workpiece W is machined as shown in Fig. 6.
In this embodiment, the tool body 1 is arranged so as to take a position in which the axis O thereof is parallel to the wall face P, and a space is provided between the straight neck 1B and the wall face P.
Furthermore, as previously mentioned, by rotating the tool body 1 on the axis O in a tool rotational direction T, and also by feeding it along the axis O;
the one corner 15 which protrudes outwardly above the outer periphery of the cutting edge section 1D, and the cutting edges 14 as one pair which intersect with each other thereat, cut the wall face P.

Thus, in the cutting process with a forward motion of the tool body 1 along the axis O, the cutting edge 14, which extends from the one corner 15 toward the tip, performs this cutting process.
After arriving at the terminal of this cutting process (the forward end of the tool body 1), the tool body 1 is shifted slightly in a direction which is parallel to the wall face P and intersects with the axis O.
Then, in the cutting process with a backward motion of the tool body 1 along the axis O, the cutting edge 14, which extends from the one corner 15 toward the rear, performs this cutting process.
Furthermore, after arriving at the terminal of this cutting process (the backward end of the tool body 1), the tool body 1 is also shifted slightly in a direction, which is parallel to the wall face P and intersects with the axis O.
A series of the above cutting processes is repeated continuously along the wall face P, and then the wall face P is machined.

In the tool body 1 which is the plunge cutting cutter used for this plunge cutting method, and has the aforementioned configuration, the wall face 3B used as an incline wall face is formed in the insert pocket 3. In a view from a position opposite the bottom face 3A, the wall face 3B inclines radially outward along the axis O to the tip.
When the tool body 1 cuts the wall face P with a backward motion as shown in Fig. 6, the wall face 3B can support the cutting load which acts on the cutting insert 10 in the direction of the tip along the axis O.

Thus, even in the cutting process with a backward motion of the tool body 1, a high feed-speed is possible with sufficient strength and/or with sufficient rigidity to fix the cutting insert 10.
On the other hand, in the cutting process with a forward motion of the tool body 1, the wall face 3D which faces toward the tip of the insert pocket, can support the cutting load which acts on the cutting insert 10.
Thereby, in the above tool body 1 and in the above plunge cutting cutter, when plunge cutting with both the cutting processes of the forward and backward motions of the cutting tool 1 is performed alternatively and repeatedly, the overall feed-speed of the motions can be set at a high speed.
Therefore, in plunge cutting work, this back-and-forth motion of the tool body 1 can greatly promote the enhancement of cutting efficiency.

Furthermore in this embodiment,
not only the clamp screw 4 which goes through the mounting hole 17 and is screwed into the screw-hole 3E in the insert pocket 3,
but also the clamp piece 5A of the clamp device 5 provided close to the rear of the insert pocket 3,
press and clamp the cutting insert 10 onto the bottom face 3A in the insert pocket 3.
Therefore, this mode can effectively prevent the cutting load caused by the cutting process with the backward motion of the tool body 1, from concentrating at the clamp screw 4. Thus, this also can greatly promote enhancement of cutting efficiency together with maintaining a high feed-speed.

On the other hand, in the plunge cutting cutter, the cutting insert 10 which has the aforementioned irregular hexagonal shape, is attached in the insert pocket 3 which provides the wall face 3B as the incline wall face, and protrudes its one corner 15 outwardly above the outer periphery.
When the tool body 1 is moving forward and backward, the one corner 15 and the cutting edges 14 as one pair having a linear shape extending from the one corner 15 toward the tip and the rear, cut the wall face P alternately.
Thus, the contact area between the cutting edge 14 and the wall face P does not become too large, and this can then prevent vibration from occurring. Therefore, a high feed-speed becomes reliably achievable.

Furthermore, since the cutting insert 10 having the irregular hexagonal planar shape is attached so as to protrude its one corner 15 outwardly above the outer periphery,
one of two side faces (the flank faces 13) of the cutting insert 10 adjacent to the corner 16 opposite the one corner 15, can abut closely on the wall face 3B as the above incline wall face in the insert pocket 3.
Particularly, in this embodiment, the whole of this wall face 3B contacts the flank face 13 to abut closely thereon. Therefore, the strength and rigidity needed to fix the cutting insert 10, can be improved significantly.

Furthermore, since the cutting insert 10 has the hexagonal planar shape, one of the cutting edges 14 which faces toward the tip of the tool body 1, can also be arranged at a portion closer to the tip than the position of the cutting edges 14 as one pair which intersect with each other at the one corner 15. Therefore, at the terminal of the cutting process with the forward motion of the tool body, when shifting the tool body 1 in a direction which is parallel to the wall face P and intersects with the axis O, this one of the cutting edges 14, which faces toward the tip, can perform cutting work in which this one of the cutting edges 14 cuts the bottom face of the workpiece W. The bottom face of the workpiece W is connected to the wall face P.

Additionally, in this embodiment, in the view from a position opposite the bottom face 3A, the wall face 3B inclines radially outward at an angle θ of inclination in the range of from 10 to 25 degrees with the axis O of the tool body 1 in the direction in accordance with the tip.
If the angle θ of inclination is so small that the wall face 3B becomes nearly parallel to the axis O, there will be a risk that the wall face 3B cannot support fully the load which acts on the cutting insert 10 in the direction of the tip along the axis O.
On the other hand, if the angle θ of inclination is excessively large, the thickness of the crossing portion where the wall face 3B and the tip face of the tool body 1 intersect with each other, becomes smaller in the direction of the tip (the crossing portion where the wall face 3B and the tip face intersect with each other).
Therefore, the angle θ of inclination of the wall face 3B is preferably in the above range.

### [industrial Applicability]

The tool body of the plunge cutting cutter, the plunge cutting cutter, and the plunge cutting method provided in this invention enable plunge cutting work in which the tool body moves forward and backward along an axis to cut the wall face of a workpiece, to be performed effectively at a high feed-speed not only during the forward motion but also during the backward motion.

## Claims

1. A tool body of a plunge cutting cutter comprising a cylindrical shape with an axis as its center, in which
an insert pocket is formed in the outer periphery close to a tip of the tool body in a direction of the axis;
a cutting insert is detachably attached in the insert pocket; and
by rotating the tool body on the axis in a tool rotational direction, and also by feeding the tool body along the axis, cutting edges of the cutting insert cut a wall face of a workpiece to perform a plunge cutting:
wherein
the insert pocket comprises
a bottom face which faces the tool rotational direction and,
a plurality of wall faces which extend from the bottom face toward the tool rotational direction;
and
one of the wall faces which is located in the inner circumference closer to the tip than the others and faces radially outward,
is an incline wall face which inclines radially outward along the axis to the tip, in a view from a position opposite the bottom face.

2. The tool body of the plunge cutting cutter according to Claim 1, wherein an angle between the incline wall face and the axis is in a range of from 10 to 25 degrees in a view from a position opposite the bottom face.

3. A plunge cutting cutter in which:
the cutting insert is attached in the insert pocket of the tool body of the plunge cutting cutter according to Claim 1 or Claim 2;
the cutting insert has a hexagonal planar shape with two hexagonal faces;
one hexagonal face of the two hexagonal faces is used as a rake face which faces the tool rotational direction; the other hexagonal face of the two hexagonal faces is used as
an attaching face on which the bottom face abuts closely; one corner which is a corner of the one hexagonal face, protrudes outwardly above the outer periphery of the tool body;
two side faces, as one pair, of the cutting insert, intersect with each other at a corner opposite the one corner; and one of the two side faces which is located closer to the tip
of the tool body than the other, abuts on the incline wall face.

4. A plunge cutting method for cutting the wall face of a workpiece using the plunge cutting cutter according to Claim 3, comprises a cutting process in which a cutting edge which extends from
the one corner toward the tip of the tool body, cuts a workpiece when the tool body moves forward along the axis; and another cutting process in which another cutting edge which
extends from the one corner toward the rear of the tool body, cuts a workpiece when the tool body moves backward along the axis.
